Europäisches Patentamt

European Patent Office

Office européen des brevets

(19)

(11) Publication number: **0 208 998**
**A2**

# (12) EUROPEAN PATENT APPLICATION

(21) Application number: 86109028.0

(22) Date of filing: 02.07.86

(51) Int. Cl.⁴: **G 05 B 19/417**

(30) Priority: 19.07.85 US 757225

(43) Date of publication of application: 21.01.87
**Bulletin 87/4**

(84) Designated Contracting States: **AT BE CH DE FR GB IT LI
LU NL SE**

(71) Applicant: **Lovrenich, Rodger T., 209 Whispering Sands,
Santa Teresa New Mexico 88008 (US)**
Applicant: **Leaf, Robin H., 26 Southway, London
NW11 6RU (GB)**

(72) Inventor: **Lovrenich, Rodger T., 209 Whispering Sands,
Santa Teresa New Mexico 88008 (US)**
Inventor: **Leaf, Robin H., 26 Southway, London
NW11 6RU (GB)**

(74) Representative: **Dipl.-Ing. H. Hauck Dipl.-Phys. W.
Schmitz Dipl.-Ing. E. Graalfs Dipl.-Ing. W. Wehnert
Dr.-Ing. W. Döring, Mozartstrasse 23,
D-8000 München 2 (DE)**

(54) Distributed logic control system and communication loop.

(57) A distributed logic control system and communication loop embodies an orchestrater computer (11) containing part of the system logic and a plurality of station computers (13, 27, 42, 55, 69) containing part of the system logic. The orchestrater computer and station computers are connected in a communication loop (15, 29, 40, 57, 71, 79). Each station computer controls at least one work station. The orchestrater computer continually time-division multiplexes information packets containing bytes that have different bit setting privileges associated with them. A status byte has assigned privileges, and a command byte and data byte have alterable privileges. The orchestrater computer (11) and any station computer (13, 27, 42, 55, 69) can independently shut down the system prior to failure upon detection of a fault.

EP 0 208 998 A2

0208998

RCC/srs                                    L-106

## DISTRIBUTED LOGIC CONTROL SYSTEM
## AND COMMUNICATIONS LOOP

The present invention relates to systems for controlling automated production lines and the like, and more particularly to distributed control apparatus of the described character and to communications thereamong.

Background of the Invention

Automated production lines typically include many stations at which work is performed on a workpiece by a tool. A workpiece is clamped in position at each work station, and the tools at the several work stations engage the workpieces. The tool is then withdrawn at each work station, and the workpieces are unclamped and transferred simultaneously to the next work stations by a single transfer mechanism. The automotive industry is an example of an industry with high usage of automated production lines. An automated production line might produce engine blocks, for example. The engine block casting is passed through various work stations which mill, bore, drill, hone, gage, etc. These operations are performed at various locations on the block. It is not uncommon to have sixty work stations in such an automated production line. The times required to perform the several operations may be different, but the parts cannot be unclamped and transferred until all stations are finished since the motion of a single transfer mechanism moves all parts.

Substantial computer capability and sophistication are required in conventional automated production lines because a central or host computer is called upon to rapidly handle vast amounts of data and do the entire job of controlling the production line. The conventional control system utilizes one large central computer for taking data separately from each work station, processing the data at the central computer, and sending commands separately to the individual work stations to activate all work station functions. The work stations usually arbitrarily accept the commands as being correct. The usual limiting parameter in the control of mechanical systems is time. Work stations typically need to react within two milliseconds to prevent tool travel from exceeding mechanical tolerances. Central computer clock speeds of fifty megahertz may be required. As more data is processed at higher speeds, cost rapidly increases and dependability decreases due to increased complexity.

In an effort to reduce complexity and increase cycle time, various schemes of distributed system and control have been proposed. Each work station or group of work stations is directly controlled by a local work station controller. The several work station controllers are connected in parallel to a central orchestrater computer for coordinating system operation. However, substantial time is still required for the orchestrater to poll the several work station controllers before initiating a collective operation, such as clamping or unclamping all parts, collective transfer to successive work stations, and initiating a subsequent work cycle.

## Objects and Summary of the Invention

It is therefore a general object of the present invention to provide a control system of the described type which is characterized by increased efficiency, speed and reliability, and by decreased cost and complexity.

A further and more specific object of the invention is to provide a communication technique by which individual work station controllers may rapidly and accurately transmit status information pertinent to collective operation so that the orchestrater computer may initiate such collective operations without substantial delay.

The control system of the present invention comprises a central orchestrater computer and a plurality of work station computers for controlling operation at the individual work stations. Each work station computer has one or more programs prestored therein for controlling operation at its associated work station. The individual work stations operate semi-independently for drilling or milling a part, and report status to the orchestrater for initiation of collective action, such as clamping and transferring operations.

In accordance with the present invention, the several work stations have their status outputs logically interconnected in such a way that any one station may inhibit such collective operation, while a consensus of all stations is necessary to initiate such collective operation. Thus, status information needed to initiate collective operations inherently performs the necessary logic, without requiring separate polling and decision making at the orchestrater computer. In one embodiment of the invention, this is accomplished by connecting the status outputs of the multiple work stations to a common hardwire bus such that the status signals are "wire ORed" to the orchestrater computer. The output from any one work station computer can inhibit further operation.

In a preferred embodiment of the invention, an analogous operation is performed with the the several work station computers connected in a closed communications loop, specifically a serial communication loop, with the orchestrater computer. Information is continually but separately received and transmitted around the loop by each computer. This information is a time division multiplex of command signals from the orchestrater to the various computers, status information from the work station computer to the orchestrater, and miscellaneous data information. The status information packet contains individual bits analogous to the individual bus wires of the hardwire embodiment.

Initially, each status bit is set by the orchestrater at a level which would permit collective operation, and then launched onto the communication loop. Any work station computer can set one or more status bits to a no-action level, the communication protocal being such that the work station computer can so set but not reset the status bits, the latter only being permitted at the orchestrater. Status information at each station computer is thus logically ORed with information received from the upstream computer (orchestrater or station), and the result transmitted to the downstream computer. Information cycle time is thus primarily a function of communicator speed around the loop. The orchestrater does not initiate collective action in the absence of consensus, but continues to monitor status bits in the information packets circling the loop for a consensus among work stations to collective action.

The circulating information packets also contain command and data sections. The orchestrater places command information in the appropriate sections of an information packet, which is then read and recognized at each work station as the information packet is passed therethrough. A "clamp" command would be recognized as valid but not acted upon at a drill station for example, but would be passed along. Data can be downloaded and uploaded between the orchestrater and one work station. Conventional "baton passing" data transmission techniques are employed.

There is thus a continuous flow of information around the communication loop, with station computers reporting operating and test conditions to the orchestrater and the orchestrater issuing commands. There is an odd number of packets, and the number of stations is an odd multiple of the number of bytes in a packet. Every other status byte and data byte is cleared by the orchestrater. Watchdog relays exist at all stations. Any station can shut down the system when transmission on the communication loop is interrupted. The information in at least one time slot is forwarded around the loop by the station in control, unaltered by all other stations, so the initiating station can effect a signal integrity check by comparing the information received in that time slot with the information sent out in the same time slot. If the returned information is different from that sent out, the initiating station discontinues output transmission and thereby activates
its internal watchdog relay for system-wide shut down.

## Brief Description of the Drawings

Figure 1 is a diagrammatic view illustrating the
control system and communication loop of the present invention
on an automatic machine transfer line.

Figure 2 is a simplified block diagram showing the
control system and communication loop of the present invention
embodied in a transfer line, with an orchestrater computer,
three work stations with accompanying station computers and
machines, a clamp station and station computer that operates a
clamp bar, and a transfer station and station computer that
operates a transfer bar. The orchestrater computer and station
computers are connected in an optic communication loop.

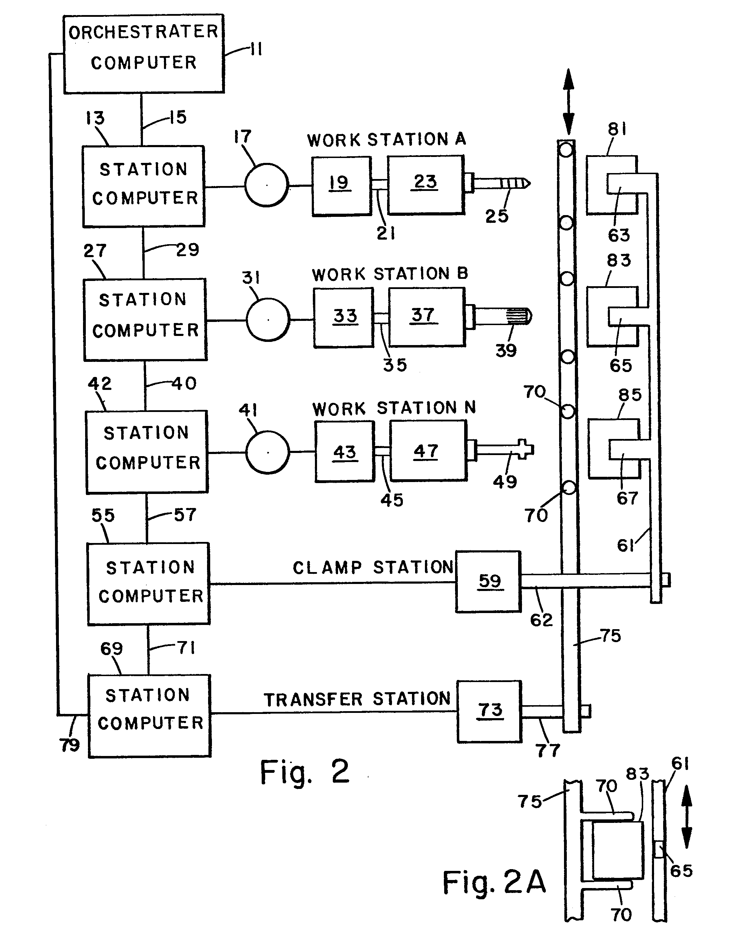

Figure 2A is a fragmentary view of a workpiece,
transfer bar and clamp bar at work station B with the clamp
disengaged from the workpiece and the transfer bar guides in
the transfer position.

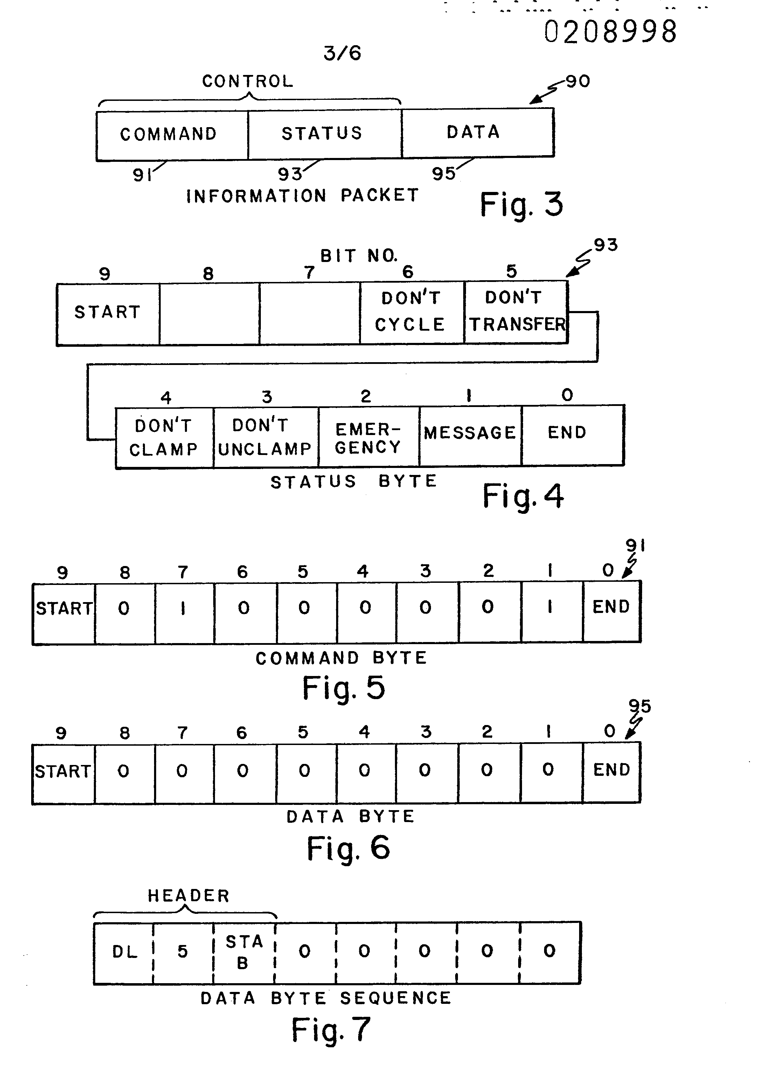

Figure 3 is a schematic illustration of three bytes
forming a signal packet that is circulated on the communication
loop by time division multiplexing.

Figure 4 is a schematic illustration of the bit
configuration in the status byte of Figure 3.

Figure 5 illustrates a binary command in the command
byte of Figure 3.

Figure 6 illustrates a binary bit pattern in the data
byte of Figure 3.

Figure 7 illustrates a sequence of data bytes on the
communication loop. Dotted lines are used to show that the
data bytes need not contiguous, but may be separated by command
bytes and status bytes.

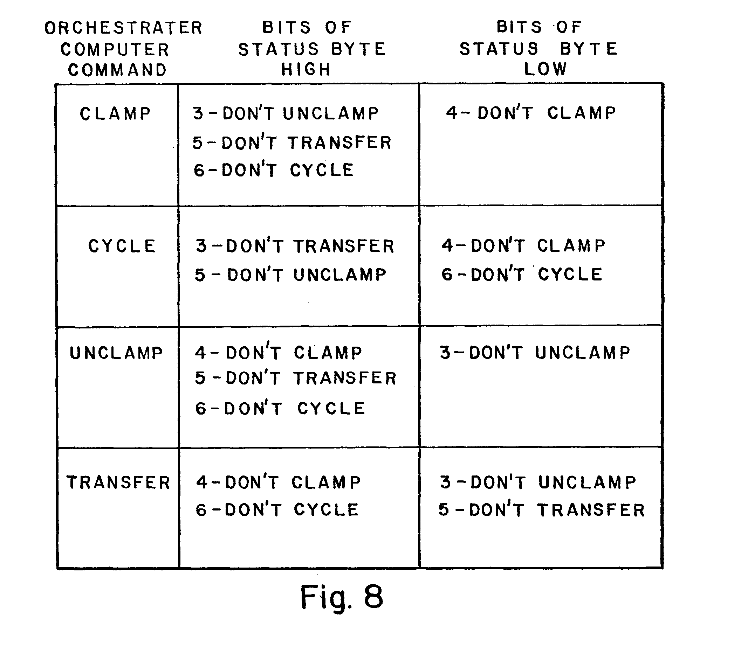

Figure 8 is a diagram showing the bit pattern created
in the status byte by the station computers that are required
for an orchestrater computer command.

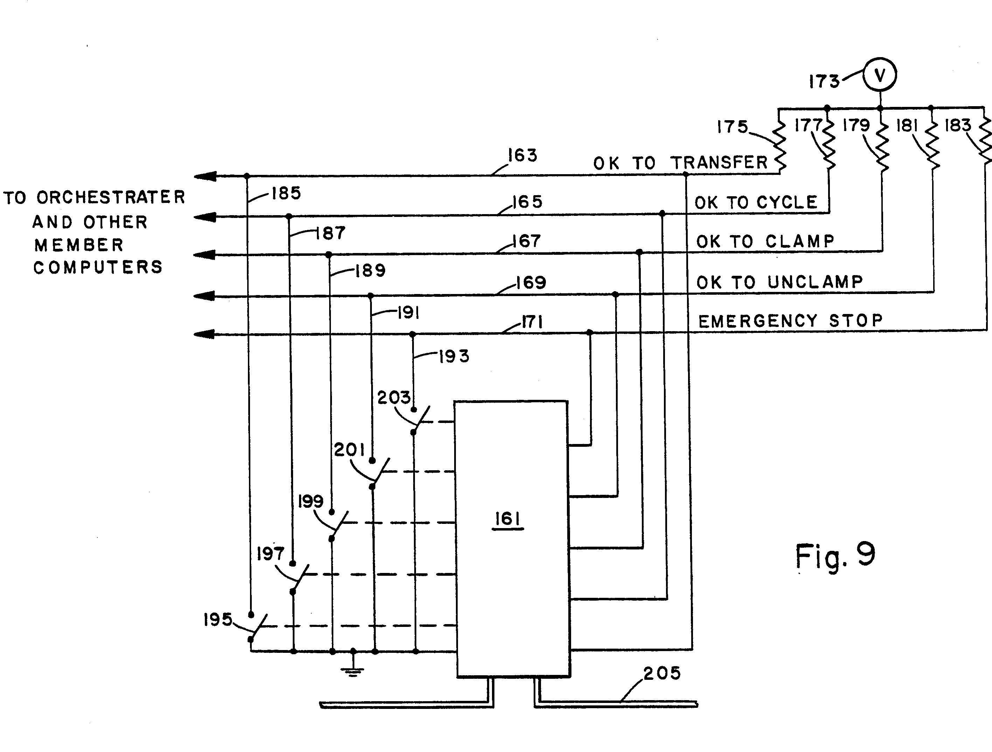

Figure 9 is a schematic diagram which illustrates the alternative hardwired embodiment of the invention.

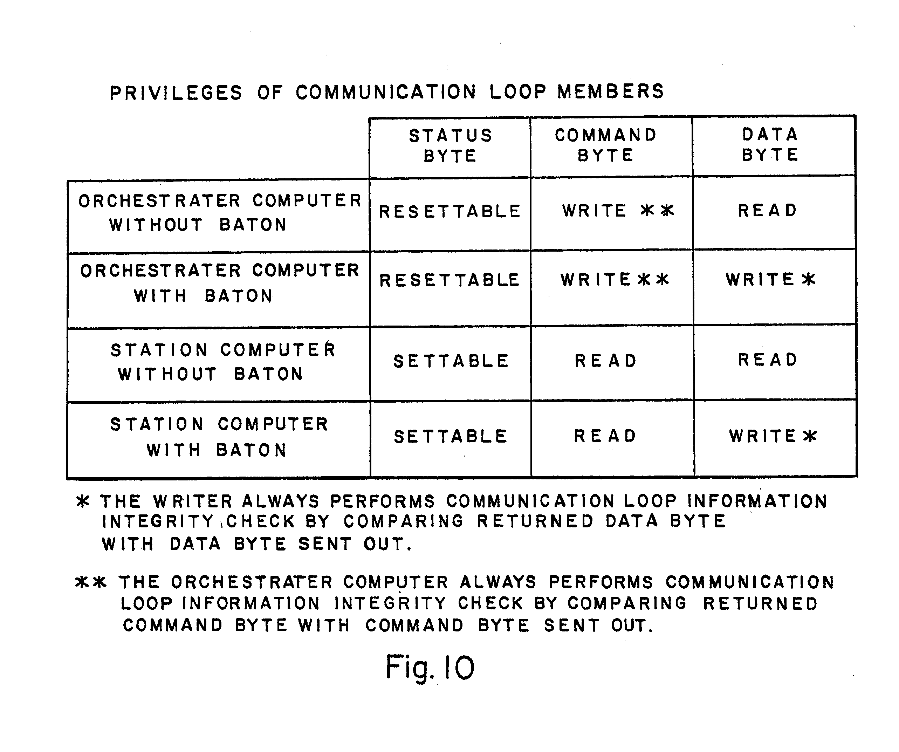

Figure 10 is a table representing the privileges of the orchestrater computer and the station computers, with and without the baton, as the privileges relate to the status byte, command byte and data byte.

Detailed Description of Preferred Embodiments

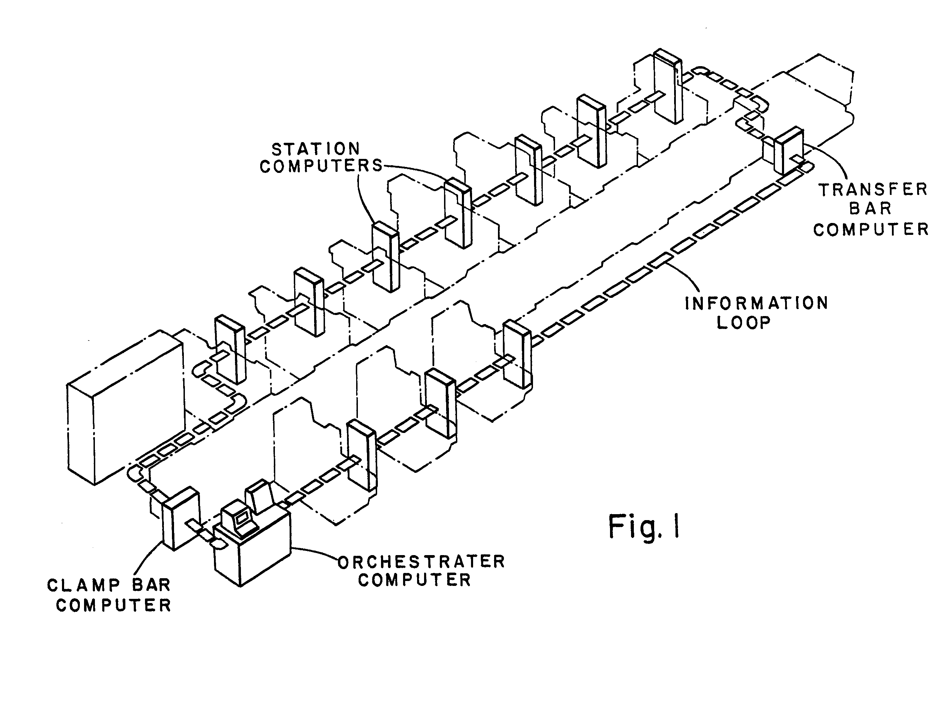

An automated machining line is shown in Figures 1 and 2 of the drawings. An orchestrater computer is connected with station computers, located at remote stations, in an information communication loop that passes command signals and data signals in time slots of information packets containing command bytes, status bytes and data bytes. Some of the bytes are settable by the station computers and some are not. Each station computer is connected to at least one mechanical device (phantom in FIG. 1). One of the mechanical devices is a clamp bar that clamps workpieces in position at the work stations where other mechanical devices perform work (e.g. drill, hone and bore) on the workpieces. Another mechanical device is a transfer bar that transfers the workpieces to the next work stations at the desired time when all tools are withdrawn.

The transfer system shown in Figure 1 (and 2) has four collective functions that it must perform in the proper sequence. These are clamp, cycle, unclamp and transfer. ("Cycle" is a term used to indicate that the various work station machines are commanded to perform their functions, such as drilling for example.) The tools are cleared from the workpieces and the clamps 63-67 of the clamp bar 61 are clamped onto the workpieces in the condition shown in Figure 2. This is a condition that would permit the orchestrater computer to instruct the station computers to cycle the mechanisms at the stations. Figure 2A shows the clamps unclamped and the transfer guides 70 engaged with a workpiece 83 at work station B. In this condition of the clamps and transfer bar, with the tools withdrawn, the transfer station is ready to index the workpieces onto the next station.

Communication is accomplished with a continuous flow of information packets. In the embodiment shown in FIG. 3, each packet contains a command byte, a status byte and a data byte. Information travels on the communication loop from the station computers on the status byte (Figure 4) that enables the orchestrater computer to see the system condition (combined condition of the stations on the loop) as reflected in information that the station computers put in the status byte on the communication loop. Each station is not sending separate information, but rather is ORing onto bits of the status byte. Thus, the status byte reflects the condition of the system. The orchestrater computer compares the status byte against a table in its memory and issues its collective command to clamp, cycle, unclamp or transfer. The station computers are fed with information from the stations via limit switches, sensors and the like so that they can indicate on the communication loop to the orchestrater computer that they are in condition to accept certain commands. They have programs in their memories that permit them to recognize an expected orchestrater computer command. Any one station computer indicating that it is not ready for a specific command is sufficient to prevent the issuance of the command by the orchestrater computer.

Figure 2 of the drawings is a simplified block diagram of an automated production line utilizing the distributed control system of the present invention, and including three work stations A, B and N. The orchestrater computer 11 communicates with a station computer 13 located at Work Station A through fiber optic cable 15. Station computer 13 is electrically connected to stepper motor 17 which is mechanically connected to a multiple speed shiftable transmission 19. The output of the transmission 19 is coupled through shaft 21 to the slide of a machine tool 23 which operates a drill 25. (Other components such as the drill motor, etc. are normally present but have been eliminated from this view for the sake of simplicity.)

Work Station B includes a station computer 27 coupled by fiber optic cable 29 to station computer 13 at Work Station A. Station computer 27 is electrically connected to stepper motor 31, which in turn is mechanically connected to a multiple speed shiftable transmission 33. The output of transmission 33 is coupled through a shaft 35 to the slide of a machine tool 37 which operates a reamer 39. Other work stations may be serially connected in the line by fiber optic links 40, and the nth work station N includes the station computer 42 that is electrically connected to a stepper motor 41 which in turn is mechanically connected to a multiple speed shiftable transmission 43. The output of transmission 43 is coupled through a shaft 45 to the slide of a machine tool 47 that operates a boring bar 49.

Station computer 42 is coupled to a station computer 55 at the Clamp Station by fiber optic cable 57. Station computer 55 controls clamp motor 59 which operates clamp bar 61 through shaft 62. Clamp bar 61 rotates clamps 63, 65, and 67 at Work Stations A, B and N simultaneously between the clamped (FIG. 2) and unclamped (FIG. 2A) positions. Station computer 55 is connected on the loop to a transfer station computer 69 by the fiber optic cable 71. Station computer 69 at the transfer station controls transfer motor 73, which operates a transfer bar 75 through a shaft 77. Transfer bar 75 rotates the guides 70 into (FIG. 2A) and out of (FIG. 2) the transfer position. Station computer 69 communicates with the orchestrator computer 11 through the fiber optic link 79, which thus closes the information loop. The embodiment shown in thus a closed loop system wherein all elements communicate on a single fiber optic communication loop. A twisted wire pair or radio communications link could be used in place of the fiber optic link. Fiber optics avoid electromagnetic interference. Workpieces 81, 83, 85 are shown at successive Stations A, B and N.

The system must perform the clamp, cycle, unclamp and transfer functions in the proper sequence. The system communication is accomplished on the orbital fiber optic communication loop by means of a continuous series of information packets. Each packet contains a plurality of contiguous bytes. A packet 90 having three bytes is shown in Figure 3 of the drawings and discussed herein. It is to be understood that the packet could contain a different number of bytes. The bytes may also have a different number of bits than the number demonstrated. The system is extremely flexible. In the embodiment shown control information is separated from data. This is done by time division multiplexing. Control is accomplished with the command and status bytes as indicated in Figure 3. Referring to Figures 3-6, the packet 90 issued by orchestrater computer 11 contains a command byte 91, a status byte 93 and a data byte 95 multiplexed into time slots. Each byte has ten bits in the embodiment shown, including a start bit to indicate where the byte commences and an end bit to indicate where the byte ends.

Figure 10 shows the privileges of the various loop computers relative to the status byte, control byte and data byte. The orchestrater computer can reset the status byte. A station computer can set the status byte. The orchestrater can write to the command byte. A station computer can read the command byte. Both orchestrater and station computers can read the data byte. However, only a computer with the baton can write to the data byte. (The asterisk footnotes indicate the manner in which information integrity on the loop is checked.) The command byte is issued by the orchestrater computer and is not alterable by the station computers. The status byte is settable but not resettable by each station computer to reflect its station condition. The orchestrater computer has control of the data byte until it relinquishes control to a station computer (i.e. passes the baton). The data byte can be controlled by any member. It is not alterable by the non-controlling members and is used by both the orchestrater computer and the station computers as an integrity check by checking the returned byte to see that it is the same as the byte transmitted.

The command byte can contain numbers 0-255 on the communication loop and is used by orchestrater computer 11 to place commands, such as clamp, cycle, unclamp and transfer, on the communication loop. Figure 5 shows a command byte with the decimal number "65" set in binary on the byte. This byte is placed on the communication loop by the orchestrater computer. Each station computer contains a table of valid commands that can be issued by the orchestrater computer. A single command number from the orchestrater computer on the command byte can mean different things to different stations. The number "65" may mean "insert the gage finger" at one station and "do nothing" at another station, for example.

The data byte (Figure 6) can handle numbers 0-255 to place data on the loop from the orchestrater computer to the station computers, or from a station computer to the orchestrater computer. Various amounts of data can be passed on the loop in the successive data bytes. An example of the use of the data byte is the orchestrater computer asking a station computer for a history of operations at its station over a period of time, and the station computer providing this information to the orchestrater computer. The orchestrater computer has control of the data byte until it relinquishes it to a station computer. The data byte has ten bits as shown in Figure 6. Each data byte is separated on the communication loop by a command byte and a status byte. This is represented in Figure 7 by separating the data bytes in the sequence with dotted lines.

When a computer receives a sequence of data bytes in a loop test sequence, it retransmits the sequence on the loop. The sensing computer recognizes this sequence as being received for the second time. It checks the last five bytes as a loop integrity check. If there is a match, the sequence of bytes is cleared by the computer. If there is an integrity breach, the system is shut down by a station resident watchdog relay as explained later. There is an odd number of packets, and the number of stations is an odd multiple of the number of bytes in a packet. Every other packet is cleared by the orchestrater as explained later.

The status byte of Figure 4 includes eight usable bits. Bit 6 is set high by any station computer to indicate that it has a condition that will not permit cycling (workpiece unclamped for example). Bit 5 is set high by any station computer to indicate that it has a condition that will not permit transferring (clamps not unclamped for example). Bit 4 is set high to indicate that it has a condition that will not permit clamping (machine slide not in position for example). Bit 3 is set high by a station to indicate that it has a condition that will not permit unclamping (machine still cycling for example). The collective-action status of the entire system is thus condensed into a form of on-off information in the status byte, rather than being spread in parallel between the orchestrater computer and station computers.

Figure 8 illustrates one arrangement of the condition of the bits of the status byte that must exist for the orchestrater computer to issue the corresponding command. For example, the orchestrater computer will issue a "clamp" command only when bits 3, 5 and 6 are high, and bit 4 is low. Bit 2 of the status byte in Figure 4 is set high by a station computer in an emergency station (person pulls an emergency cord indicating human endangerment, for example). Bit 1 is set high by any station computer to indicate that it has a message. The orchestrater computer identifies the station and obtains the message. A bit on the status byte that is set high by a station computer must be cleared as it passes through the orchestrater computer. Otherwise, it would remain high even when the condition that caused it has changed and the bit should be low. The system of the present invention utilizes an odd number of packets, real or simulated. Every other status byte and data byte is cleared in the orchestrator computer, with each station compute ORing the bits in adjacent status bytes as they pass. If either of the adjacent status bytes contains an emergency stop bit that is set high, for example, the system will be shut down. The number of stations, real or simulated, is an odd multiple of the number of bytes in a packet, so that every station examines the bits in every status byte.

The embodiment shown herein includes the following steps: transfer bar engages the parts and transfer the parts; clamp bar clamps the parts; transfer bar disengages the parts; cycle; clamp bar unclamps the parts; and transfer bar returns, engages the parts and transfers the parts. Assume that all the machine tools have completed their tasks (cycled). The system is in a condition with all tools withdrawn, with clamps unclamped, and with transfer bar guides 70 disengaged as shown in Figure 2. Each station computer knows that this condition exists at its station by scanning limit switches that indicate the withdrawn position of the tool. Each work station sets the "don't cycle" and "don't clamp" bits high on the status byte when its tool is withdrawn. The "don't transfer" bit is low since the clamp is unclamped. The "emergency stop" bit is low. ("High" and "low" may be referred to as "one" and "zero", but it is understood that the reverse could be true if desired.)

The orchestrater computer recognizes this condition on the status byte and sends out a "transfer" command. The station computers at the work stations, clamp station and transfer station recognize this as a valid command in their tables in memory and refrain from vetoing it by not stopping transmission which would actuate the watchdog relays. The transfer station actuates transfer bar 75 which rotates the transfer bar guides 70 down to engage the workpieces and moves forward to transfer the workpieces to the next work stations in the system. If the command is an invalid command, a station computer will recognize it as such by comparing the command byte with the command table in its memory, and shutting down the system through the watchdog relay.

After the transfer bar has finished repositioning the parts, it leaves the "don't clamp" bit low so the orchestrater computer can issue the "clamp" command. The Clamp Station next has to energize clamp bar 61 to clamp the workpieces in position (FIG. 2). The Clamp Station computer sets the "don't transfer", "don't unclamp" and "don't cycle" bits high on the status byte until the clamp has clamped the workpiece and the sensors or switches at the clamp reflect this condition. When this happens, a signal is sent from a sensor, such as a limit switch at the clamp, to the Clamp Station computer. The Clamp Station Computer will not set the "don't cycle" bit high on the status byte on the next packet pass, but it will set the "don't transfer" bit high. The "don't unclamp" bit is also set high. The system also provides for handling a mistake made by the orchestrater computer. If, for example, the orchestrator computer mistakenly issues a "transfer" command while a tool is not withdrawn at a work station, the work station computer detects this while scanning its I/O (Input/Output) ports and, seeing the involved limit switch not set back, recognizes an error in the command on the loop. The station computer shuts the system down through the watchdog relay.

If a work station detects a developing problem that is not critical at the time, its station computer sets the message indicator bit (bit 1 - Figure 4) high on the status byte, indicating that it has a problem. The orchestrater computer has control of the data byte and sends out a signal on the data byte asking the station computer to identify itself with its code. The station computer identifies itself on the data byte. The orchestrater computer hands control of the data byte to the station computer (passes the baton). The station computer sends a message such as "Oil pressure getting low". This message is a preselected number on the data byte to the orchestrator computer. The orchestrater computer correlates this number to a message in a message table and advises the operator. Meanwhile, the station computer indicates that the message is ended and returns control of the data byte to the orchestrater computer (passes the baton back). Several stations may set the message indicator bit high as it goes past. The orchestrater computer recognizes the station that set the bit last and the last message is handled first.

The system can be arranged so that the communications paths to the control and/or status bytes are hard wired, if desired. Figure 9 shows an embodiment wherein the status byte contains five bits, and the lines to the bits are hard wired into the system and the other bytes of a packet are handled on the fiber optic link 205. A station computer 161 is connected to five wires 163, 165, 167, 169 and 171, which in turn are connected to a voltage source 173 through resistors 175, 177, 179, 181 and 183. The wires continue through the other station computers and the orchestrator computer as indicated on the drawing. Five wires 185, 187, 189, 191 and 193 are also connected to the lines 163, 165, 167, 169 and 171 and include switches 195, 197, 199, 201 and 203 that run to ground. The switch symbols represent switches or sensors which close the circuit in the wires 185, 187, 189, 191 and 193 in response to the situation which requires the particular control command. The voltage on the wires 163, 565, 167, 169 and 171 is at the level of source 173 when the switches 195, 197, 199, 201 and 203 are open. When one of the switches is closed, the voltage on its associated wire is dropped across the respective resistor and the particular line is at ground potential. This condition is reflected in the station computers and the orchestrater computer.

The invention claimed is:

**1.**

A distributed logic control system for obtaining coordinated operation at a plurality of work stations, said system comprising a plurality of first station control means (13, 27, 42) each controlling operation at one of said stations (A, B, C), second station control means (55 or 69) for controlling collective operation at all of said work stations (A, B, C), and orchestrater control means (11) coupled to said first and second station control means (13, 27, 42 and 55 or 69) for coordinating operation thereamong and for activating said second station control means (55 or 69) only when said first station control means (13, 27, 42) are at a status for permitting said collective action,

characterized in that said orchestrater control means (11) and said first and second station control means (13, 27, 42 and 55 or 69) are interconnected so as to receive common station status information, and in that each of said first and second station means (13, 27, 42 and 55 or 69) is adapted to inhibit collective operation in said second station control means (55 or 69) by transmitting appropriate status information to said orchestrater control means (11).

**2.**

The system set forth in claim 1 wherein status information is characterized by individual bits of status information having either an action level for permitting collective action at said second station control means (55 or 69) or a no-action level for inhibiting such collective action, and

wherein said individual status bits are operatively connected in common at said first station control means (13, 27, 42) such that a no-action level at any one of said first station control means inhibits collective action.

3.

The system set forth in claim 2 wherein all of said first station control means (13, 27, 42) are connected in parallel on a common data bus (163 through 171).

4.

The system set forth in claim 2 wherein all of said orchestrater control means (11), said first station control means (13, 27, 42) and said second station control means (55 or 69) are connected in a common communication loop (15, 29, 40, 57, 71, 79) on which information is continually transmitted by and received at each said station, and

wherein information continuously transmitted and received on said loop is time-division multiplexed digital information including separate time segments associated with transmission of command and status information around said loop.

5.

The system set forth in claim 4 wherein said time-division multiplexed digital information includes at least one status byte having individual bits associated with the same status information at all of said first station control means (13, 27, 42),

said orchestrater control means (11) initially transmitting said bits at levels to permit collective action, said first station control means (13, 27, 42) including means for changing levels of said status information bits as a function of status at the associated said station prior to retransmission on said loop, such that said orchestrater control means receives said altered status information to inhibit collective operation at said second station control means (55 or 69).

**6.**

The system set forth in claim 5 wherein said time-division multiplexed digital information further includes command and data bytes, said orchestrater control means (11) and said station control means (13, 27, 42 and 55 or 69) having differing privileges relative to setting and resetting digital information in said command and data bytes.

Fig. 1

STATION COMPUTERS

TRANSFER BAR COMPUTER

INFORMATION LOOP

CLAMP BAR COMPUTER

ORCHESTRATER COMPUTER

1/6

0208998

Fig. 2

Fig. 2A

0208998

CONTROL

| COMMAND | STATUS | DATA |
|---------|--------|------|

91      93      95

90

INFORMATION PACKET

## Fig. 3

BIT NO.

93

| 9 | 8 | 7 | 6 | 5 |
|---|---|---|---|---|
| START | | | DON'T CYCLE | DON'T TRANSFER |

| 4 | 3 | 2 | 1 | 0 |
|---|---|---|---|---|
| DON'T CLAMP | DON'T UNCLAMP | EMER-GENCY | MESSAGE | END |

STATUS BYTE

## Fig. 4

91

| 9 | 8 | 7 | 6 | 5 | 4 | 3 | 2 | 1 | 0 |
|---|---|---|---|---|---|---|---|---|---|
| START | 0 | 1 | 0 | 0 | 0 | 0 | 0 | 1 | END |

COMMAND BYTE

## Fig. 5

95

| 9 | 8 | 7 | 6 | 5 | 4 | 3 | 2 | 1 | 0 |
|---|---|---|---|---|---|---|---|---|---|
| START | 0 | 0 | 0 | 0 | 0 | 0 | 0 | 0 | END |

DATA BYTE

## Fig. 6

HEADER

| DL | 5 | STA B | 0 | 0 | 0 | 0 | 0 |
|----|---|-------|---|---|---|---|---|

DATA BYTE SEQUENCE

## Fig. 7

| ORCHESTRATER COMPUTER COMMAND | BITS OF STATUS BYTE HIGH | BITS OF STATUS BYTE LOW |
|---|---|---|
| CLAMP | 3 - DON'T UNCLAMP<br>5 - DON'T TRANSFER<br>6 - DON'T CYCLE | 4 - DON'T CLAMP |
| CYCLE | 3 - DON'T TRANSFER<br>5 - DON'T UNCLAMP | 4 - DON'T CLAMP<br>6 - DON'T CYCLE |
| UNCLAMP | 4 - DON'T CLAMP<br>5 - DON'T TRANSFER<br>6 - DON'T CYCLE | 3 - DON'T UNCLAMP |
| TRANSFER | 4 - DON'T CLAMP<br>6 - DON'T CYCLE | 3 - DON'T UNCLAMP<br>5 - DON'T TRANSFER |

Fig. 8

Fig. 9

# PRIVILEGES OF COMMUNICATION LOOP MEMBERS

| | STATUS BYTE | COMMAND BYTE | DATA BYTE |
|---|---|---|---|
| ORCHESTRATER COMPUTER WITHOUT BATON | RESETTABLE | WRITE ** | READ |
| ORCHESTRATER COMPUTER WITH BATON | RESETTABLE | WRITE ** | WRITE * |
| STATION COMPUTER WITHOUT BATON | SETTABLE | READ | READ |
| STATION COMPUTER WITH BATON | SETTABLE | READ | WRITE * |

\* THE WRITER ALWAYS PERFORMS COMMUNICATION LOOP INFORMATION INTEGRITY CHECK BY COMPARING RETURNED DATA BYTE WITH DATA BYTE SENT OUT.

\** THE ORCHESTRATER COMPUTER ALWAYS PERFORMS COMMUNICATION LOOP INFORMATION INTEGRITY CHECK BY COMPARING RETURNED COMMAND BYTE WITH COMMAND BYTE SENT OUT.

## Fig. 10